# EUROPÄISCHE PATENTANMELDUNG

(11) **EP 4 089 038 A1**
(43) Veröffentlichungstag der Anmeldung: **16.11.2022**
(21) Anmeldenummer: 22173210.0
(22) Anmeldetag: 13.05.2022
(51) Int. Cl.: B65G 13/06, B64C 1/20, B64D 9/00

(54) **FRACHTFÖRDERSYSTEM, FLUGZEUG UND VERFAHREN ZUR BEREITSTELLUNG EINES VERKABELTEN FRACHTFÖRDERSYSTEMS**

(30) Priorität: 14.05.2021 DE 102021112558
(71) Anmelder: Telair International GmbH, 83714 Miesbach (DE)
(72) Erfinder: Urch, Matthias, 85658 Egmating (DE)
(74) Vertreter: Würmser, Julian

(57) **Zusammenfassung**

Die Erfindung betrifft ein Frachtfördersystem (10) zum Fördern von Frachtstücken, insbesondere von Containern und/oder Paletten, in einem Frachtraum eines Flugzeugs, mit wenigstens einer Frachtfördervorrichtung (14), insbesondere Rollenbahnen, wobei die Frachtfördervorrichtung (14) umfasst:
- wenigstens einen Rahmen (19);
wenigstens eine Rollenantriebseinheit (11) mit mindestens einer Rolle (12) zum Fördern der Frachtstücke;
- wenigstens einen Hauptleitungsstrang (15), insbesondere einen Teilkabelbaum, der an dem Rahmen (19) angeordnet ist; und
- wenigstens ein Verteilermodul (13) zum Verbinden des wenigstens einen Hauptleitungsstrangs (15) mit wenigstens einem weiteren Hauptleiterstrang, wobei das Verteilermodul (13) am Rahmen (19) angeordnet und über wenigstens einen Nebenleitungsstrang (16) mit der Rollenantriebseinheit (11) verbunden ist.

## Beschreibung

Die Erfindung betrifft ein Frachtfördersystem, ein Flugzeug mit einem solchen Frachtfördersystem und ein Verfahren zur Bereitstellung eines verkabelten Frachtfördersystems.

Generell können Frachtdecks von Flugzeugen mit Frachtfördereinrichtungen (PDUs: "Power Drive Units") ausgestattet sein, um die Be- und Entladung der Frachtdecke mit Frachtstücken zu erleichtern. Die Frachtfördereinrichtungen bringen dabei die erforderliche Kraft für den Transport der Frachtstücke auf. Ein Steuercomputer steuert diese Frachtfördereinrichtungen an, um vorzugsweise ein im Wesentlichen automatisches Be- und Entladen zu ermöglichen.

Um die Frachtfördereinrichtungen zu betreiben, sind diese bekannterweise an zumindest einem Kabelbaum angeschlossen, der unter dem Frachtraumboden in der Flugzeugstruktur verlegt ist. Nach dem Stand der Technik verläuft ein derartiger Kabelbaum entlang der gesamten Frachtraumlänge des Flugzeugs. Eine solche Unterboden-Verkabelung hat einen erhöhten Planungs- und Zertifizierungsaufwand zur Folge, da Separierungsrichtlinien zu anderen Kabelsträngen des Flugzeugs, zu kritischen Systemen (z.B. Hydraulik-oder Kraftstoffleitungen) und zu Hindernissen eingehalten werden müssen. Zudem muss im Flugzeug-Tankbereich der Kabelbaum gegen Beschädigung geschützt werden. Die Luftfahrtbehörden fordern in diesen kritischen Bereichen aufwändige Analysen zum Nachweis der Sicherheit. Entsprechend den vorliegenden Regelungen und Richtlinien ist der Kabelbaum bzw. die Verkabelung generell mit dafür vorgesehenen Haltern an der Flugzeugstruktur zu befestigen.

Um die Frachtfördereinrichtungen zu betreiben, ist an jeder Position der Frachtfördereinrichtungen ein Abzweig in dem Kabelbaum vorgesehen, der an einer Steckvorrichtung unterhalb des Frachtraumbodens endet. An dieser Steckvorrichtung ist herkömmlicherweise ein Adapterkabel angeschlossen, das durch den Frachtraumboden hindurch zu der Frachtfördereinrichtung geführt ist. Hierbei ist nachteilig, dass das Adapterkabel durch eine im Frachtraumboden vorgesehene Durchführung verläuft. Generell sind Durchführungen im Frachtraumboden zu vermeiden, da diese Schwachstellen hinsichtlich der Dichtheit des Frachtraums darstellen. Die Durchführungen sind daher mit hohem Aufwand abzudichten, um im Brandfall ein Entweichen von Löschmittel aus dem Frachtraum zu verhindern. Häufig ist die Adapterverkabelung mit einer Gummiöse ausgestattet, die in die Durchführung einsitzt. Bei Frachtdecks mit einer Vielzahl von Frachtfördereinrichtungen und somit einer Vielzahl von Durchführungen ist daher der Abdichtungsaufwand sehr hoch.

Ferner ist nachteilhaft, dass aus dem Abzweig zu der Steckvorrichtung und dem durch den Frachtraumboden geführten Adapterkabel eine erhöhte Leitungslänge resultiert. Derartige Ausführungen haben ein erhöhtes Gewicht sowie einen erhöhten Material- und Montageaufwand zur Folge.

Des Weiteren ist beim Stand der Technik nachteilig, dass nach der Installation der Kabelbaum auf korrekte Montage, insbesondere in Bezug auf die Pinbelegung, sowie auf Beschädigungen geprüft werden muss. Aufgrund der erschwerten Zugänglichkeit ist dies sehr aufwändig.

Der Erfindung liegt daher die Aufgabe zu Grunde, ein Frachtfördersystem anzugeben, bei dem ein Planungs- und Zertifizierungsaufwand und ein Montageaufwand verringert sind sowie eine Zugänglichkeit, insbesondere im Wartungsfall, verbessert ist. Ferner liegt der Erfindung die Aufgabe zu Grunde, ein Flugzeug und ein Verfahren zur Bereitstellung eines verkabelten Frachtfördersystems anzugeben. Erfindungsgemäß wird diese Aufgabe im Hinblick auf das Frachtfördersystem durch den Gegenstand des Anspruchs 1 gelöst. Hinsichtlich des Flugzeugs und des Verfahrens wird die vorstehend genannte Aufgabe jeweils durch den Gegenstand des Anspruchs 13 (Flugzeug) und des Anspruchs 14 (Verfahren) gelöst.

Insbesondere wird die Aufgabe durch ein Frachtfördersystem zum Fördern von Frachtstücken, insbesondere von Containern und/oder Paletten, in einem Frachtraum eines Flugzeugs, mit wenigstens einer Frachtfördervorrichtung, insbesondere Rollenbahnen, gelöst, wobei die Frachtfördervorrichtung Folgendes umfasst:
- wenigstens einen Rahmen;
- wenigstens eine Rollenantriebseinheit mit mindestens einer Rolle zum Fördern der Frachtstücke;
- wenigstens einen Hauptleitungsstrang, insbesondere einen Teilkabelbaum, der an dem Rahmen angeordnet ist; und
- wenigstens ein Verteilermodul zum Verbinden des wenigstens einen Hauptleitungsstrangs mit wenigstens einem weiteren Hauptleitungsstrang, wobei das Verteilermodul am und/oder im Rahmen angeordnet und über wenigstens einen Nebenleitungsstrang mit der Rollenantriebseinheit verbunden ist.

Ein Gedanke der vorliegenden Erfindung ist es, das Verteilermodul am Rahmen, zumindest aber oberhalb des Frachtdecks anzuordnen. Der Rahmen kann als Träger für das Verteilermodul und/oder für die Rollenantriebseinheit dienen. Bevorzugt weist die Frachtfördervorrichtung eine Vielzahl von Rollenantriebseinheiten auf, die jeweils mit einem Verteilermodul verbunden sind. Alternativ kann das Verteilermodul mit mehreren Rollenantriebseinheiten verbunden sein.

Die Erfindung hat den Vorteil, dass das Verteilermodul als Abzweigstelle zur Spannungsversorgung und/oder kommunikativen Verbindung der Rollenantriebseinheit sowie zur Verbindung von zwei Hauptleitungssträngen, insbesondere zwei Teilkabelbäumen, schnell und einfach vom Frachtraum aus zugänglich ist. Es entfällt somit eine aufwändige Demontage von etwaigen Bodenelementen des Frachtraums, um zu Leitungssträngen bzw. Kabelbäumen und/oder zu Steckvorrichtungen bzw. Terminalblöcken unterhalb des Frachtraumbodens zu gelangen. Die Wartung ist daher erheblich erleichtert. Weiterhin ermöglicht das Verteilermodul ein einfaches und schnelles Verbinden von mehreren Teilkabelbäumen zu einem durchgehenden Netz oder Bus.

Die Rollenantriebseinheit ist vorzugsweise an dem Rahmen angeordnet. Die Rollenantriebseinheit ist bevorzugt an dem Rahmen derart angeordnet, dass die wenigstens eine Rolle im Betrieb, insbesondere bei Betätigung der Rollenantriebseinheit, mit wenigstens einem Frachtstück in Kontakt bringbar ist oder in Kontakt steht. Vorzugsweise ist die Frachtfördervorrichtung eine Rollenbahn, in der die zumindest eine Rollenantriebseinheit und das zugeordnete Verteilermodul angeordnet sind.

Der Rahmen erstreckt sich bevorzugt in eine Längsrichtung. Der Rahmen kann U-förmig, z.B. als U-Profil, ausgebildet sein. Bevorzugt weist der Rahmen zwei Seitenwände auf, zwischen denen das Verteilermodul und die Rollenantriebseinheit angeordnet sind. Die Rollenantriebseinheit und das Verteilermodul sind bevorzugt in Längsrichtung benachbart angeordnet. Hier ist vorteilhaft, dass das Verteilermodul und die Rollenantriebseinheit platzsparend angeordnet sind, sodass Bauraum eingespart wird.

Erfindungsgemäß ist das Verteilermodul mit zwei Hauptleitungssträngen verbunden und einem Nebenleitungsstrang, der mit der Rollenantriebseinheit verbunden ist. Bevorzugt sind wenigstens ein eingehender und ein ausgehender Teilkabelbaum an dem Verteilermodul angeschlossen. Weiter bevorzugt sind die Hauptleitungsstränge durch das Verteilermodul miteinander elektrisch und/oder kommunikativ, insbesondere signalübertragend verbunden. Das Verteilermodul hat die Aufgabe die Rollenantriebseinheit über den Nebenleitungsstrang mit zumindest einem der Hauptleitungsstränge zu verbinden. Der Nebenleitungsstrang ist bevorzugt ein Verbindungskabel, das eine Stichleitung zwischen dem Verteilermodul und der Rollenantriebseinheit bildet. Bevorzugt sind das Verteilermodul und die Rollenantriebseinheit im Wesentlichen auf einer gemeinsamen Ebene an dem Rahmen angeordnet. Das Verteilermodul kann die Funktion der Verbindung bzw. des Zusammenschlusses von mindestens zwei Hauptleitungssträngen, insbesondere Teilkabelbäumen, und/oder des Abzweigens von Leitungen zur Steuerung und/oder Versorgung der Rollenantriebseinheiten übernehmen.

Wenigstens einer der Hauptleitungsstränge kann an dem Rahmen angeordnet sein. Damit ermöglicht die Erfindung in einer Ausführungsform, dass die Hauptleitungsstränge nicht, wie aus dem Stand der Technik bekannt, unterhalb des Frachtraumbodens verlaufen, sondern an dem Rahmen. Hierbei ist vorteilhaft, dass eine aufwändig abzudichtende Leitungsdurchführung im Frachtraumboden entfällt sowie Planungs- und Zertifizierungsmaßnahmen reduziert sind. Ferner ist von Vorteil, dass ein Korrosionsschutz von Erdungsleitungen sowie einer Adressierungsleitung für die Rollenantriebseinheit, die herkömmlicherweise unterhalb des Frachtraumbodens mit der Flugzeugstruktur verbunden sind, entfallen kann. Bevorzugt sind die Hauptleitungsstränge entlang des Rahmens verlaufend angeordnet.

Des Weiteren kann der Hauptleitungsstrang und insbesondere der weitere Hauptleitungsstrang an dem Rahmen vor dem Einbau vormoniert sein. Dadurch wird die Montage erheblich erleichtert und somit Kosten eingespart. Es ist möglich, dass die Frachtfördervorrichtung, insbesondere die Rollenbahn, aus mehreren nacheinander angeordneten Rahmenstücken, z.B. U-Profilen, zusammengesetzt ist. An wenigstens einem Rahmenstück können mehrere Rollenantriebeinheiten und mehrere Verteilermodule vorgesehen sein. Dabei kann jeweils eine Rollenantriebseinheit mit einem der Verteilermodule verbunden sein. Alternativ oder zusätzlich können an wenigstens einem Rahmenstück mehrere Rollenantriebseinheiten und wenigstens ein Verteilermodul angeordnet sein, wobei das Verteilermodul mit mehreren, insbesondere zumindest zwei, Rollenantriebseinheiten verbunden ist.

Bei einer Ausführungsform können an wenigstens einem Rahmenstück eine Rollenantriebseinheit und ein mit der Rollenantriebseinheit verbundenes Verteilermodul angeordnet sein. Bei einer (weiteren) Ausführungsform können an wenigstens einem Rahmenstück zumindest drei Rolleneinheiten und zumindest drei Verteilermodule angeordnet sein, wobei jede der Rollenantriebseinheiten mit einem der Verteilermodule verbunden ist. Bei einer weiteren Ausführungsform können an wenigstens einem Rahmenstück zumindest drei Rolleneinheiten und ein mit den Rolleneinheiten verbundenes Verteilermodul angeordnet sein.

Die jeweiligen Hauptleitungsstränge weisen vorzugsweise elektrische Leitungen zur Spannungsversorgung, insbesondere zur Wechselspannungs- und Gleichspannungsversorgung, der Rollenantriebseinheit sowie zumindest eine Erdungsleitung auf. Zum Betrieb der Rollenantriebseinheit kann eine Wechselspannung von 115 Volt mit einer Frequenz von 400 Hertz und/oder eine Gleichspannung von 28 Volt zur Verfügung stellt werden. Zusätzlich weisen die Hauptleitungsstränge wenigstens eine Leitung zur Signalübertragung, insbesondere zur Datenübertragung auf. Dazu kann ein Daten-Bussystem vorgesehen sein, das vorzugsweise ein CAN-BUSSystem ist. Ebenso kann der Nebenleitungsstrang die vorgenannten Leitungen aufweisen.

Bei einer bevorzugten Ausführungsform weist das Verteilermodul ein (wasserfestes) Gehäuse und wenigstens ein in das Gehäuse integriertes Verteilelement, insbesondere eine Leiterplatte, mit mehreren Anschlussstellen auf, an die die Hauptleitungsstränge und/oder der Nebenleitungsstrang angeschlossen sind. Mit anderen Worten befinden sich die Anschlussstellen für die Hauptleitungsstränge und/oder den Nebenleitungsstrang innerhalb des Gehäuses auf dem Verteilelement. Das Gehäuse ist bevorzugt wasserfest, d.h. gegenüber Feuchtigkeit dicht, ausgeführt. Hier ist vorteilhaft, dass ein Abdichtungsaufwand verringert ist, da sich die Anschlussstellen in dem Gehäuse befinden und somit lediglich die Strangdurchführung abzudichten ist. Die einzelnen Pins der Stränge liegen geschützt innerhalb des Gehäuses.

Die Anschlussstellen können Steckpins auf dem Verteilelement sein. Die Hauptleitungsstränge und/oder der Nebenleitungsstrang können mit dem Verteilelement durch Steckverbindungen verbunden sein. Alternativ ist möglich, dass die Hauptleitungsstränge und/oder der Nebenleitungsstrang mit mindestens einer der elektrischen Leitungen auf dem Verteilelement direkt verlötet sind. Das Verteilelement kann eine fest verdrahtete Leiterplatte sein. Alternativ kann das Verteilelement eine Platine mit mehreren Leiterbahnen sein.

Vorzugsweise ist das Gehäuse des Verteilermoduls aus Kunststoff. Das Gehäuse weist bevorzugt eine Zugangsöffnung auf, die durch einen Deckel verschlossen ist. Der Deckel kann mit dem Gehäuse verschraubt und/oder verklebt sein.

Bei einer weiteren bevorzugten Ausführungsform ist das Verteilermodul im Wesentlichen in unmittelbarer Nähe zur Rollenantriebseinheit angeordnet. Das Verteilermodul kann an die Rollenantriebseinheit beabstandet angrenzen. Mit anderen Worten kann das Verteilermodul zu der Rollenantriebseinheit benachbart angeordnet sein. Zwischen dem Verteilermodul und der Rollenantriebseinheit kann ein Abstand von 15 cm bis 100 cm (ca. 5,9 Zoll bis ca. 39,4 Zoll) vorgesehen sein. Das Verteilermodul kann maximal 40 cm (ca. 15,7 Zoll), bevorzugt maximal 30 cm (ca. 11,8 Zoll), besonders bevorzugt maximal 20 cm (ca. 7,9 Zoll) von der Rollenantriebseinheit beabstandet sein. Alternativ ist möglich, dass das Verteilermodul maximal 15 cm (ca. 5,9 Zoll) von der Rollenantriebseinheit beabstandet ist. Bei dieser Ausführungsform ist vorteilhaft, dass die Leitungslänge des Nebenleitungsstrangs im Vergleich zu dem aus dem Stand der Technik bekannten Leitungslängen verringert ist und somit Material, Gewicht und ein Montageaufwand reduziert sind.

Bevorzugt weist die Frachtfördervorrichtung wenigstens eine Rolle auf, die zwischen dem Verteilermodul und der Rollenantriebseinheit an dem Rahmen angeordnet ist. Die Rolle kann walzenförmig sein. Bevorzugt weist die Frachtfördervorrichtung eine Vielzahl von Rollen auf. Bei dieser Ausführungsform dient die Rolle zwischen dem Verteilermodul und der Rollenantriebseinheit nicht nur zum Transport von Frachtstücken, sondern zusätzlich als Stoßschutz für das Verteilermodul sowie die Rollenantriebseinheit. Besonders bevorzugt ist in einer Längsrichtung des Rahmens an dem Verteilermodul beidseitig eine Rolle angeordnet. Die Rolle steht vorzugsweise in Einbaulage nach oben über das Gehäuse des Verteilermoduls über.

Bei einer Ausführungsform weist das Verteilermodul wenigstens eine Adressierungseinheit zur Adresscodezuweisung zu der Rollenantriebseinheit auf, die einen Adresscode der Rollenantriebseinheit enthält und/oder mit einem Adresscode der Rollenantriebseinheit konfigurierbar ist. Mit anderen Worten ist eine Adressierungseinheit vorgesehen, in die ein Adresscode der Rollenantriebseinheit eingespeichert ist und/oder die so konfigurierbar ist, dass der Adressierungseinheit ein neuer Adresscode für die Rollenantriebseinheit zuweisbar ist. Der Adresscode kann vorbestimmt sein. Hier ist vorteilhaft, dass die Adressinformation durch die Adressierungseinheit an der Rollenantriebseinheit vor Ort vorgesehen ist. Somit werden Leitungslängen und dadurch Kosten und Gewicht eingespart.

Bei einer Ausführungsform ist die Adressierungseinheit programmierbar. Beispielsweise kann sie mehrere Magnetschalter, insbesondere Reedschalter, und die Frachtfördervorrichtung mehrere Magnete aufweisen, die mit den Magnetschaltern derart magnetisch koppelbar oder gekoppelt sind, dass ein Schaltmuster der Magnetschalter einen Adresscode der Rollenantriebseinheit ergibt. Die Anzahl der Magnetschalter kann der Anzahl der Magnete entsprechen.

Beispielsweise kann sich das Schaltmuster der Magnetschalter bei der Montage des Verteilermoduls an dem Rahmen einstellen. Das Schaltmuster ist mit einem Bit-Muster vergleichbar, dass je nach Schaltstellung des jeweiligen Magnetschalters "1" oder "0" ergibt. Dadurch ergibt sich bei entsprechender Schaltstellung ein Muster, das dem Adresscode der zugehörigen Rollenantriebseinheit entspricht. Eine Steuerung kann somit bei Bedarf, d.h. beim Transportieren eines Frachtstücks, die Rollenantriebseinheit über den Adresscode identifizieren und so gezielt betätigen. Die Steuerung kann den Adresscode der Rollenantriebseinheit beispielsweise über wenigstens eine Datenbusleitung, insbesondere eine CAN-BUS-Leitung, auslesen und die Rollenantriebseinheit entsprechend ansteuern.

Bei einer Ausführungsform umfasst die Adressierungseinheit wenigstens einen, insbesondere nicht-flüchtigen, Datenspeicher mit gespeichertem Adresscode der Rollenantriebseinheit. Es ist möglich, dass der Datenspeicher mit einem Adresscode beschreibbar ist und/oder der gespeicherte Adresscode aus dem Datenspeicher auslesbar ist. Der Datenspeicher hat den Vorteil, dass die Adressierungseinheit einfach gehalten ist.

Bei einer Ausführungsform weist die Adressierungseinheit wenigstens einen RFID-Tag auf, der mit einem Adresscode der Rollenantriebseinheit beschreibbar ist. Die RFID-Technologie stellt eine kostengünstige und einfache Möglichkeit dar, wenigstens einen Adresscode der Rollenantriebseinheit abzuspeichern und bereitzustellen. Der Adresscode der Rollenantriebseinheit kann aus dem RFID-Tag auslesbar sein. Die Codierung des RFID-Tags kann per Nahfeldkommunikation ("NFC") erfolgen.

Die Adressierungseinheit kann in das Gehäuse des Verteilermoduls integriert angeordnet sein. Vorzugsweise umfasst die Adressierungseinheit ein separates Gehäuse, das in dem Gehäuse des Verteilermoduls angeordnet ist. In dem separaten Gehäuse können beispielsweise die Magnetschalter zur Adresscode-Generierung angeordnet sein. Zusätzlich oder alternativ können in dem separaten Gehäuse ein nicht-flüchtiger Datenspeicher und/oder wenigstens ein RFID-Tag angeordnet sein. Alternativ kann die Adressierungseinheit an dem Gehäuse des Verteilermoduls außen angeordnet sein. Dabei kann ein separates Gehäuse für die Adressierungseinheit an dem Gehäuse des Verteilermoduls angeordnet sein. Es ist möglich, dass an dem Gehäuse des Verteilermoduls außen wenigstens ein, insbesondere beschreibbarer und/oder auslesbarer, RFID-Tag aufgeklebt ist.

Besonders bevorzugt weist der Rahmen wenigstens einen in Längsrichtung verlaufenden Führungskanal und einen den Führungskanal verschließenden Deckel auf, wobei in dem Führungskanal zumindest einer der Hauptleitungsstränge anordenbar oder angeordnet ist. Dies hat den Vorteil, dass die Hauptleitungsstränge zur Versorgung der Rollenantriebseinheit und/oder Kommunikation mit der Rollenantriebseinheit nicht, wie aus dem Stand der Technik bekannt, unterhalb des Frachtraumbodens geführt sind, sondern im Frachtraumboden verlaufen. Diese sind daher einfach und schnell zugänglich. Des Weiteren ist der Planungs-, Zertifizierungs- und Montageauswand erheblich reduziert. Der Führungskanal kann an einer der Seitenwände des Rahmens längsverlaufend ausgebildet sein.

Der Führungskanal kann nutartig sein. Der Führungskanal kann quer zu einer Mittelachse des Rahmens nach außen geöffnet werden. An der Position des Verteilermoduls kann der Führungskanal unterbrochen sein, sodass die Hauptleitungsstränge nach innen zum Verteilermodul geführt werden können.

Bei einer Ausführungsform weist der Rahmen wenigstens eine Montageausnehmung in einer ersten Seitenwand auf, in die das Verteilermodul durch Einschieben eingesetzt ist. Die Montageausnehmung ist in der ersten Seitenwand ausgebildet. Die Montageöffnung kann zumindest abschnittsweise als Innenkontur eine Außenkontur des Gehäuses des Verteilermoduls aufweisen. Bei der Montage kann das Verteilermodul einfach und schnell durch die Montageöffnung quer zur Längsrichtung des Rahmens eingesetzt werden. Im eingesetzten Zustand ist das Gehäuse des Verteilermoduls mit der ersten Seitenwand verschraubt. Dazu weist das Gehäuse vorzugsweise einen Flanschbereich an einer Stirnseite auf, der im eingesetzten Zustand des Gehäuses außen an der ersten Seitenwand anliegt.

Bei einer (weiteren) Ausführungsform weist der Rahmen in einer zweiten Seitenwand wenigstens eine Positionieröffnung und das Verteilermodul wenigstens einen Fortsatz, insbesondere einen Dorn, auf, der in die Positionieröffnung eingreift. Die zweite Seitenwand ist der ersten Seitenwand gegenüber angeordnet. Die beiden Seitenwände erstrecken sich in Längsrichtung des Rahmens. Die Seitenwände begrenzen einen Zwischenraum, in dem das Verteilermodul und die Rollenantriebseinheit angeordnet sind.

Die Positionieröffnung ist vorzugsweise in der zweiten Seitenwand der Montageöffnung der ersten Seitenwand gegenüber ausgebildet. Die Positionieröffnung kann eine kreisrunde Durchgangsöffnung sein. Die Positionieröffnung kann alternativ wenigstens eine eckige Innenkontur aufweisen. Die Positionieröffnung weist vorzugsweise eine Innenkontur auf, die zu einer Außenkontur des Fortsatzes komplementär ist. Der Fortsatz ist bevorzugt an einer der Stirnseite gegenüberliegenden Seite des Gehäuses ausgebildet. Der Fortsatz greift im eingesetzten Zustand in die Positionieröffnung bevorzugt formschlüssig ein. In dieser Ausführungsform ist eine Positionierhilfe realisiert, indem beim Einschieben des Verteilermoduls der Fortsatz in die Positionieröffnung einragt.

In Einbaulage wird das Verteilermodul dadurch in Vertikalrichtung, die senkrecht zur Längsrichtung des Rahmens verläuft, gehalten. Mit anderen Worten ist das Verteilermodul durch die Positionieröffnung in dem Rahmen gelagert.

Vorzugsweise weist das Verteilelement wenigstens eine Sende- und/oder Empfängereinheit, insbesondere eine RFID-Einheit und/oder eine Bluetooth-Einheit und/oder eine Funknetzwerk-Einheit, zur drahtlosen Signalübertragung auf. Eine Steuerung kann über die Sende- und/oder Empfängereinheit mit dem Verteilermodul bzw. der Rollenantriebseinheit drahtlos kommunizieren. Es ist möglich, dass die Adressierungseinheit über die Sende- und/oder Empfängereinheit drahtlos ansteuerbar, insbesondere mit einem Adresscode programmierbar ist. Dies ermöglicht die drahtlose Kommunikation bspw. einer Steuerung mit dem Verteilermodul bzw. der Rollenantriebseinheit.

Bei einer Ausführungsform weist das Verteilelement wenigstens einen Sensor, insbesondere Temperatursensor und/oder Lichtsensor und/oder Vibrationssensor und/oder Magnetismus-erkennenden Sensor, auf. Das Verteilermodul wird bei dieser Ausführungsform nicht nur als Abzweigstelle von elektrischen Leitungen zur Rollenantriebseinheit, sondern zusätzlich zum Erfassen von Umgebungsparametern genutzt. Dies erhöht das Funktionsspektrum des Verteilermoduls. Des Weiteren sind die Sensoren in dem Gehäuse des Moduls geschützt angeordnet.

Bei einer Ausführungsform weist das Frachtfördersystem wenigstens eine erste Frachtfördervorrichtung und wenigstens eine zweite Frachtfördervorrichtung auf, wobei wenigstens ein Hauptleitungsstrang der ersten Frachtfördervorrichtung unter Verwendung wenigstens eines Verteilermoduls mit wenigstens einem Hauptleitungsstrang der zweiten Frachtfördervorrichtung, insbesondere zur Herstellung eines durchgehenden Datenbusses, in Verbindung steht.

Vorzugsweise ist ein/das Verteilermodul an wenigstens einem Längsende des Rahmens angeordnet. Dadurch kann die Verbindung der Hauptleitungsstränge der ersten und zweiten Frachtfördervorrichtung vereinfacht erfolgen.

Nach einem weiteren nebengeordneten Aspekt betrifft die Erfindung ein Flugzeug mit wenigstens einem erfindungsgemäßen Frachtfördersystem.

Nach einem weiteren nebengeordneten Aspekt betrifft die Erfindung ein Verfahren zur Bereitstellung eines verkabelten Frachtfördersystems, insbesondere eines Flugzeugs, das folgende Schritte umfasst:
- Anbringen von Teilkabelbäumen an Rahmen von Frachtfördervorrichtungen vor einem Einbringen der Frachtfördervorrichtungen in das Flugzeug und/oder vor einem Montieren;
- Montieren von wenigstens zwei Frachtfördervorrichtungen nebeneinander an einem Frachtdeck; und
- Verbinden der Teilkabelbäume der nebeneinander montierten Frachtfördervorrichtungen unter Verwendung eines Verteilermoduls, wobei das Verteilermodul an und/oder innerhalb eines der Rahmen zumindest einer der Frachtfördervorrichtungen angebracht oder anbringbar ist.

Bei einer bevorzugten Ausführungsform umfasst das Verfahren folgende weitere Schritte:
- Formschlüssiges und/oder kraftschlüssiges Verbinden des Verteilermoduls in und/oder an wenigstens einem der Rahmen; und/oder
- Verbinden der Rollenantriebseinheit nach der Montage der Frachtfördervorrichtungen auf dem Frachtdeck, insbesondere über eine Steckverbindung, mit dem Verteilermodul; und/oder
- Codieren einer Adresse der Rollenantriebseinheit unter Verwendung des Verteilermoduls.

Zu den Vorteilen des Flugzeugs sowie des Verfahrens wird auf die im Zusammenhang mit dem Frachtfördersystem erläuterten Vorteile verwiesen. Darüber hinaus können das Flugzeug und das Verfahren alternativ oder zusätzlich einzelne oder eine Kombination mehrerer zuvor in Bezug auf das Frachtfördersystem genannte Merkmale aufweisen.

Die Erfindung wird nachstehend mit weiteren Einzelheiten unter Bezug auf die beigefügten Zeichnungen näher erläutert. Die dargestellten Ausführungsformen stellen Beispiele dar, wie das erfindungsgemäße Frachtfördersystem ausgestaltet sein kann.

In diesen zeigen,
- Fig. 1: eine perspektivische Ansicht eines Frachtfördersystems nach einem bevorzugten erfindungsgemäßen Ausführungsbeispiel;
- Fig. 2: einen perspektivischen Detailausschnitt im Bereich einer Verbindungsstelle eines Verteilermoduls des Frachtfördersystems gemäß Fig. 1;
- Fig. 3: eine reduzierte Explosionsdarstellung des Frachtfördersystems gemäß Fig. 1;
- Fig. 4: eine perspektivische Teilansicht des Frachtfördersystems gemäß Fig. 1; und
- Fig. 5: eine perspektivische Ansicht eines Frachtfördersystems nach einem weiteren erfindungsgemäßen Ausführungsbeispiel, mit mehreren Frachtfördervorrichtungen.

In der nachfolgenden Beschreibung werden für gleiche und gleich wirkende Teile dieselben Bezugsziffern verwendet.

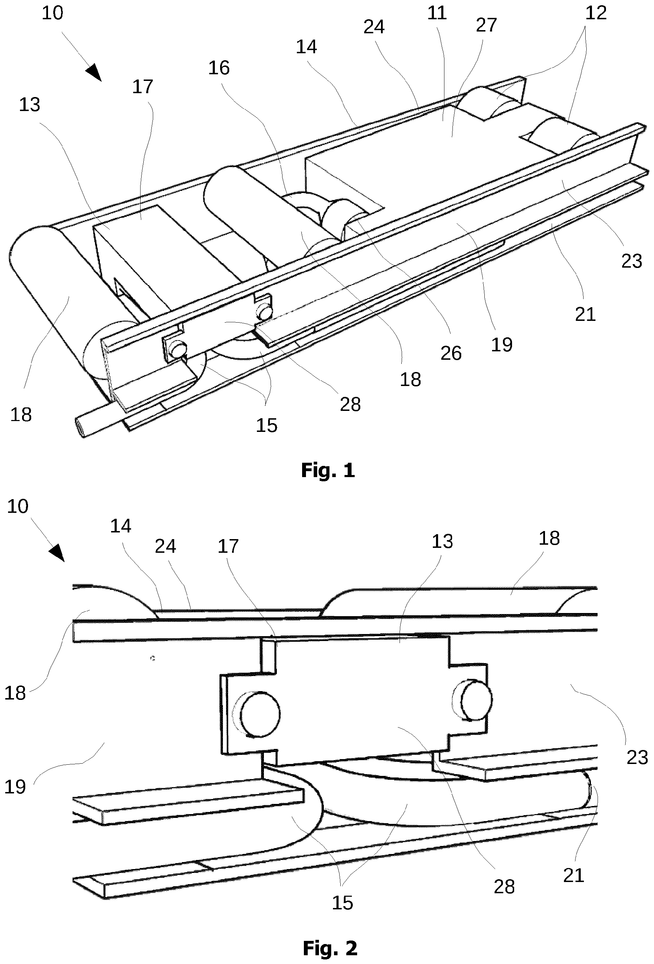

Die Fig. 1 bis 4 zeigen ein Frachtfördersystem 10 nach einem erfindungsgemäßen Ausführungsbeispiel. Das Frachtfördersystem 10 dient zum Fördern von Frachtstücken in einem Frachtraum eines Flugzeugs. Frachtstücke können Container sowie Frachtpaletten, sogenannte ULDs "Unit Load Devices", sein. Andere Frachtstücke sind möglich. In einem Flugzeug können eine Vielzahl von Frachtfördersystemen 10 zum Einsatz kommen, um die Frachtstücke beim Be- und Entladen im Frachtraum zu transportieren.

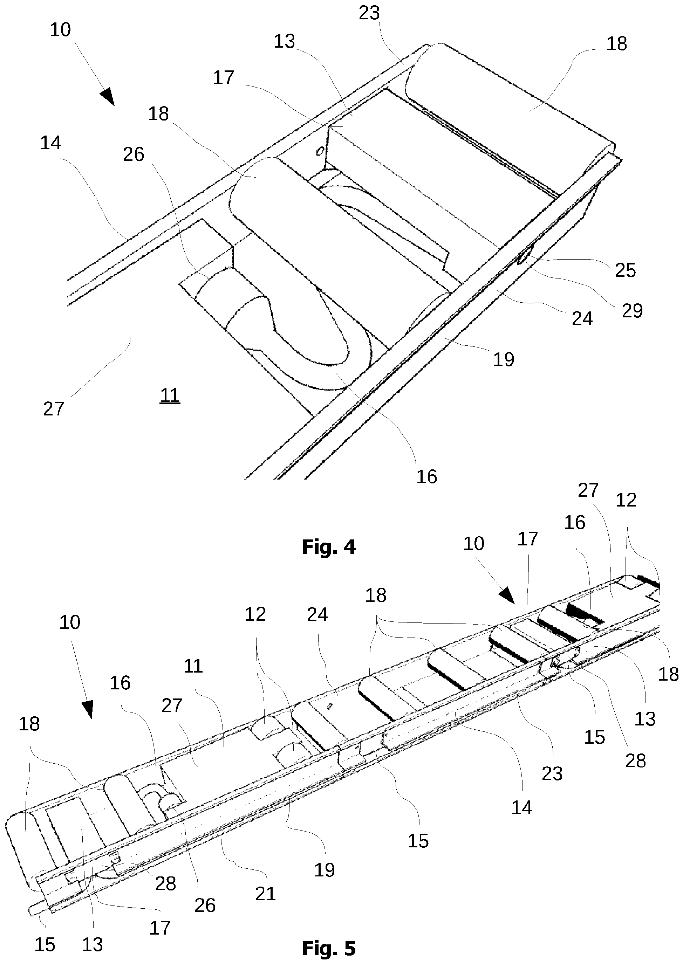

Gemäß Fig. 5 ist beispielsweise ein Frachtfördersystem 10 mit mehreren Frachtfördervorrichtungen 14, insbesondere Rollenbahnen, gezeigt, die in Reihe angeordnet sind. Mit anderen Worten sind die Frachtfördervorrichtungen 14 in einer Längsrichtung nacheinander angeordnet.

Wie in Fig. 1 zu sehen ist, weist die Frachtfördervorrichtung 14 des Frachtfördersystems 10 eine Rollenantriebseinheit 11 mit zwei Rollen 12 auf. Die Rollen 12 sind antreibbar. Die Rollen 12 dienen zum Transportieren der Frachtstücke. Die beiden Rollen 12 sind an einem ersten Längsende der Rollenantriebseinheit 11 einander gegenüber angeordnet. Die Rollenantriebseinheit 11 weist eine längliche Form auf. Die Rollenantriebseinheit 11 umfasst einen elektrischen Anschluss 26, insbesondere eine Steckbuchse, zum Anschließen eines Nebenleitungsstrangs, auf den später näher eingegangen wird.

Der elektrische Anschluss 26 ist an der Rollenantriebseinheit 11 versenkt angeordnet. Konkret umfasst die Rollenantriebseinheit 11 ein Gehäuse 27, an dem ein Absatz für den elektrischen Anschluss 26 ausgebildet ist. Der Absatz ist beispielsweise in Fig. 4 gut erkennbar.

Ferner umfasst das Frachtfördersystem 10 ein Verteilermodul 13, das der Rollenantriebseinheit 11 zugeordnet ist. Das Verteilermodul 13 dient zur Verteilung von elektrischen Leitungen zur Spannungsversorgung und/oder zur Datenverbindung und/oder zur Erdung von zumindest einem Hauptleitungsstrang 15 zu der Rollenantriebseinheit 11 hin. Konkret verbindet das Verteilermodul 13 einen ersten Hauptleitungsstrang 15 mit einem weiteren Hauptleitungsstrang 15. Die Hauptleitungsstränge 15 sind jeweils als Teilkabelbaum ausgebildet. In der nachfolgenden Beschreibung werden die Hauptleitungsstränge 15 generell als Teilkabelbäume bezeichnet.

Das Verteilermodul 13 weist ein Gehäuse 17 und ein in das Gehäuse 17 integriertes Verteilelement (nicht dargestellt) auf. Das Verteilelement ist in dem Ausführungsbeispiel eine Leiterplatte bzw. eine Platine. Das Verteilelement umfasst mehrere Anschlüsse für elektrische Leitungen der zwei Teilkabelbäume 15. Die Teilkabelbäume 15 weisen mehrere elektrische Leitungen für die Spannungsversorgung sowie die Datenverbindung der Rollenantriebseinheit 11 auf. Zusätzlich sind noch Erdungsleitungen vorgesehen. Die elektrischen Leitungen sind bevorzugt über Steckpins an dem Verteilelement angeschlossen. Ein erster der beiden Teilkabelbäume 15 ist ein Eingangs-Teilkabelbaum und ein zweiter der beiden Teilkabelbäume 15 ist ein Ausgangs-Teilkabelbaum. Die beiden Teilkabelbäume 15 sind über das Verteilelement miteinander verbunden. Die Verbindung kann elektrisch und/oder kommunikativ, d.h. signalübertragend sein.

Das Verteilelement umfasst ferner weitere Steckpins, an denen elektrische Leitungen eines Nebenleitungsstrangs 16 angeschlossen sind. Der Nebenleitungsstrang 16 umfasst, wie die Teilkabelbäume 15, elektrische Leitungen für die Spannungsversorgung, die Datenverbindung und Erdung der Rollenantriebseinheit 11. Der Nebenleitungsstrang 16 ist über das Verteilelement mit wenigstens einem der Teilkabelbäume 15 verbunden. Dazu kann das Verteilelement eine feste Verdrahtung und/oder Leiterbahnen aufweisen.

Generell ist es möglich, dass das Verteilelement mit den elektrischen Leitungen der Teilkabelbäume 15 und/oder des Nebenleitungsstrangs 16 direkt verlötet ist.

Der Nebenleitungsstrang 16 weist eine Steckvorrichtung auf, die an dem elektrischen Anschluss 26 der Rollenantriebseinheit 11 angeschlossen ist. Der Nebenleitungsstrang 16 verläuft von dem Verteilermodul 13 zur Rollenantriebseinheit 11 S-förmig. Andere Leitungsverläufe des Nebenleitungsstrangs 16 sind möglich.

Wie in Fig. 1 erkennbar, sind das Verteilermodul 13 und die Rollenantriebseinheit 11 Teil einer Frachtfördervorrichtung 14. Die Frachtfördervorrichtung 14 weist einen Rahmen 19 auf, an dem das Verteilermodul 13 und die Rollenantriebseinheit 11 angeordnet sind. Der Rahmen 19 weist eine Längserstreckung auf und ist U-förmig ausgebildet. Mit anderen Worten erstreckt sich der Rahmen 19 in eine Längsrichtung. Der Rahmen 19 weist zwei in Längsrichtung verlaufende Seitenwände 23, 24 auf, die einander gegenüberliegen. Die Seitenwände 23, 24 sind quer zur Längsrichtung voneinander beabstandet und begrenzen einen Zwischenraum. In dem Zwischenraum sind das Verteilermodul 13 und die Rollenantriebseinheit 11 angeordnet.

Das Verteilermodul 13 und die Rollenantriebseinheit 11 sind in Längsrichtung des Rahmens 19 voneinander beabstandet. Konkret weist das Gehäuse 17 des Verteilermoduls 13 in Längsrichtung von dem elektrischen Anschluss 26 der Rollenantriebseinheit 11 einen Abstand auf. Das Verteilermodul 13 ist in unmittelbarer Nähe zur Rollenantriebseinheit 11 angeordnet, um die Leitungslänge des Nebenleitungsstrangs 16 gering zu halten. Zwischen dem Verteilermodul 13 und der Rollenantriebseinheit 11 ist eine Rolle 18 der Frachtfördervorrichtung 14 angeordnet. Diese dient als Stoßschutz für das Verteilermodul 13 und die Rollenantriebseinheit 11. Gemäß Fig. 1 ist eine weitere Rolle 18 der Frachtfördervorrichtung 14 dem Verteilermodul 13 vorgeschaltet angeordnet. Die Rollen 18 sind in dem Rahmen 19 um deren Mittelachse drehbar angeordnet.

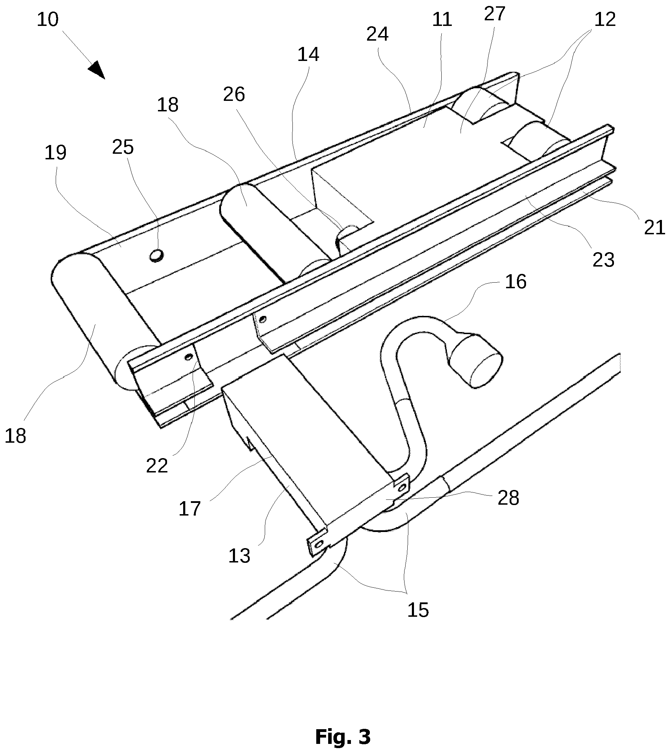

Das Gehäuse 17 des Verteilermoduls 13 ist L-förmig ausgebildet. Dies ist in den Fig. 1 und 3 ersichtlich. An dem kürzeren der beiden Schenkel des Gehäuses 17 sind abgedichtete Durchtrittsstellen der Teilkabelbäume 15 und des Nebenleitungsstrangs 16 vorgesehen. Der längere der beiden Schenkel des Gehäuses 17 erstreckt sich quer zur Längsrichtung des Rahmens 19. Das Gehäuse 17 weist einen Flanschbereich 28 an einer Stirnseite auf, der mit einer ersten der Seitenwände 23, 24 verbunden ist (siehe Fig. 2). Konkret ist das Gehäuse 17 über den Flanschbereich 28 mit der ersten Seitenwand 23 verschraubt. Der Flanschbereich 28 ist plattenförmig ausgebildet und liegt an einer quer zur Längsrichtung außenliegenden Fläche der ersten Seitenwand 23 an. Auf der der Stirnseite des Gehäuses 17 gegenüberliegenden Seite des Gehäuses 17 ist ein Fortsatz 29 ausgebildet, der in eine Positionieröffnung 25 der zweiten Seitenwand 24 eingreift. Der Fortsatz 29 ist ein zylindrischer Dorn. Die Positionieröffnung 25 ist eine kreisrunde Durchgangsöffnung.

Die erste Seitenwand 23 weist eine Montageausnehmung 22 auf, in der das Verteilermodul 13 mit dem Gehäuse 17 teilweise angeordnet ist. Konkret ist das Gehäuse 17 durch die Montageausnehmung 22 in den Rahmen 19 eingesetzt.

Der Rahmen 19 weist an der ersten Seitenwand 23 einen in Längsrichtung verlaufenden Führungskanal 21 auf. In dem Führungskanal 21 sind die Teilkabelbäume 15 an dem Rahmen 19 entlang angeordnet. Im Bereich des Verteilermoduls 13 ist der Führungskanal 21 unterbrochen, insbesondere freigeschnitten, um den Leitungsverlauf der Teilkabelbäume 15 nach innen zu führen. Die Teilkabelbäume 15 sind entlang des Rahmens 19 versenkt angeordnet. Der Führungskanal 21 ist durch einen nicht dargestellten Deckel verschließbar.

Wie in Fig. 5 gezeigt, verlaufen die Teilkabelbäume 15 entlang des gesamten Rahmens 19, wobei jeweils ein Teilkabelbaum 15 zu einem Verteilermodul 13 hinführt und ein weiterer Teilkabelbaum 15 von dem Verteilermodul 13 weg zu dem nächsten Verteilermodul 13 führt. Die Verteilermodule 13 sind daher vorzugsweise in Serie miteinander verbunden. Dies betrifft ebenso die Teilkabelbäume 15. Aus Fig. 5 geht des Weiteren hervor, dass die Frachtfördervorrichtung 14 eine Vielzahl von Rollen 18 umfasst. Das Frachtfördersystem 10 gemäß Fig. 5 ist eine Rollenbahn, die aus mehreren nacheinander angeordneten Frachtfördervorrichtungen 14 besteht. Die Teilkabelbäume 15 der nacheinander angeordneten Frachtfördervorrichtungen 14 sind durch die Verteilermodule 13 miteinander verbunden.

Nachfolgend wird ein Verfahren zur Bereitstellung eine verkabelten Frachtfördersystems 10, wie dieses in Fig. 5 gezeigt ist, beschrieben.

In einem ersten Schritt werden die Teilkabelbäume 15 an den Rahmen 19, insbesondere Rahmenstücken, der Frachtfördervorrichtungen 14 vor einem Einbringen der Frachtfördervorrichtungen 14 in den Frachtraum eines Flugzeugs sowie vor einem Montieren der Frachtfördervorrichtungen 14 angebracht. Dabei werden die Teilkabelbäume 15 in die Führungskanäle 21 der Rahmen 19 eingelegt und bevorzugt durch einen Deckel in Position gehalten. Anschließend erfolgt das Montieren der Frachtfördervorrichtungen 14 nacheinander. Diese werden dabei in Längsrichtung fest miteinander verbunden. Die nacheinander gereihten Frachtfördervorrichtungen 14 bilden eine Rollenbahn. In einem weiteren anschließenden Schritt erfolgt das Verbinden der Teilkabelbäume 15 von jeweils zwei nebeneinander angeordneten Frachtfördervorrichtungen 14 unter Verwendung eines der Verteilermodule 13, wobei das Verteilermodul 13 in dem Rahmen 19 angeordnet und an diesem befestigt ist.

Das in den Fig. 1 bis 5 gezeigte Verteilermodul 13 umfasst ferner eine nicht dargestellte Adressierungseinheit zur Adresszuweisung zu der zugehörigen Rollenantriebseinheit 11. Die Adressierungseinheit beinhaltet einen vorbestimmten Adresscode der Rollenantriebseinheit 11 und/oder ist mit einem Adresscode der Rollenantriebseinheit 11 konfigurierbar. Die Adressierungseinheit ist bevorzugt in das Gehäuse 17 des Verteilermoduls 13 integriert angeordnet. Alternativ kann die Adressierungseinheit an dem Gehäuse 17 des Verteilermoduls 13 außen angeordnet sein.

Die Adressierungseinheit kann mehrere Magnetschalter, insbesondere Reedschalter, und die Frachtfördervorrichtung 14 mehrere Magnete aufweisen, die mit den Magnetschaltern derart magnetisch koppelbar oder gekoppelt sind, dass ein Schaltmuster der Magnetschalter einen Adresscode der Rollenantriebseinheit 11 ergibt. Die Anzahl der Magnetschalter entspricht der Anzahl der Magnete.

Beispielsweise stellt sich das Schaltmuster der Magnetschalter bei der Montage des Verteilermoduls 13 an dem Rahmen 19 ein. Das Schaltmuster ist mit einem Bit-Muster vergleichbar, dass je nach Schaltstellung des jeweiligen Magnetschalters "1" oder "0" ergibt. Dadurch ergibt sich bei entsprechender Schaltstellung ein Muster, das dem Adresscode der zugehörigen Rollenantriebseinheit 11 entspricht. Eine Steuerung kann somit bei Bedarf, d.h. beim Transportieren eines Frachtstücks, die Rollenantriebseinheit 11 über den Adresscode identifizieren und so gezielt betätigen. Die Steuerung kann den Adresscode der Rollenantriebseinheit 11 beispielsweise über eine Daten-Bus-Leitung, insbesondere eine CAN-BUS-Leitung, auslesen und die Rollenantriebseinheit 11 entsprechend ansteuern.

Die Adressierungseinheit kann zusätzlich oder alternativ wenigstens einen nicht-flüchtigen Datenspeicher mit gespeichertem Adresscode der Rollenantriebseinheit 11 umfassen. Der Datenspeicher kann mit einer Steuerung signalübertragend verbunden sein. Die Adressierungseinheit kann zusätzlich oder alternativ wenigstens einen RFID-Tag aufweisen, der mit einem Adresscode der Rollenantriebseinheit 11 beschreibbar und/oder aus dem ein Adresscode der Rollenantriebseinheit 11 auslesbar ist.

Das Verteilermodul 13 kann zusätzlich wenigstens eine Sende- und/oder Empfängereinheit, insbesondere eine RFID-Einheit und/oder eine Bluetooth-Einheit und/oder eine Funknetzwerk-Einheit, zur drahtlosen Signalübertragung mit einer Steuerung aufweisen. Vorzugsweise umfasst das Verteilelement wenigstens einen Sensor, insbesondere Temperatursensor und/oder Lichtsensor und/oder Vibrationssensor und/oder Magnetismus-erkennenden Sensor. Der Sensor ist dabei in das Gehäuse 17 integriert.

An dieser Stelle sei darauf hingewiesen, dass alle oben beschriebenen Teile für sich gesehen und in jeder Kombination, insbesondere der in den Zeichnungen dargestellten Details, als erfindungswesentlich beansprucht werden.

### Bezugszeichenliste

- 10: Frachtfördersystem
- 11: Rollenantriebseinheit
- 12: Rolle der Rollenantriebseinheit
- 13: Verteilermodul
- 14: Frachtfördervorrichtung
- 15: Hauptleitungsstränge
- 16: Nebenleitungsstrang
- 17: Gehäuse
- 18: Rolle der Frachtfördervorrichtung
- 19: Rahmen
- 21: Führungskanal
- 22: Montageausnehmung
- 23: erste Seitenwand
- 24: zweite Seitenwand
- 25: Positionieröffnung
- 26: elektrischer Anschluss der Rollenantriebseinheit
- 27: Gehäuse der Rollenantriebseinheit
- 28: Flanschbereich
- 29: Fortsatz

## Patentansprüche

1. Frachtfördersystem (10) zum Fördern von Frachtstücken, insbesondere von Containern und/oder Paletten, in einem Frachtraum eines Flugzeugs, mit wenigstens einer Frachtfördervorrichtung (14), insbesondere Rollenbahnen, wobei die Frachtfördervorrichtung (14) umfasst:
- wenigstens einen Rahmen (19);
- wenigstens eine Rollenantriebseinheit (11) mit mindestens einer Rolle (12) zum Fördern der Frachtstücke;
- wenigstens einen Hauptleitungsstrang (15), insbesondere einen Teilkabelbaum, der an dem Rahmen (19) angeordnet ist; und
- wenigstens ein Verteilermodul (13) zum Verbinden des wenigstens einen Hauptleitungsstrangs (15) mit wenigstens einem weiteren Hauptleitungsstrang, wobei das Verteilermodul (13) am und/oder im Rahmen (19) angeordnet und über wenigstens einen Nebenleitungsstrang (16) mit der Rollenantriebseinheit (11) verbunden ist.

2. Frachtfördersystem (10) nach Anspruch 1,
**dadurch gekennzeichnet, dass**
das Verteilermodul (13) ein, insbesondere wasserfestes, Gehäuse (17) und wenigstens ein in das Gehäuse (17) integriertes Verteilelement, insbesondere eine Leiterplatte, mit mehreren Anschlussstellen aufweist, an die Hauptleitungsstränge (15) und/oder der Nebenleitungsstrang (16) angeschlossen sind.

3. Frachtfördersystem (10) nach Anspruch 1 oder 2,
**dadurch gekennzeichnet, dass**
das Verteilermodul (13) im Wesentlichen in unmittelbarer Nähe zur Rollenantriebseinheit (11) angeordnet ist.

4. Frachtfördersystem (10) nach einem der vorhergehenden Ansprüche, **dadurch gekennzeichnet, dass**
das Verteilermodul (13) wenigstens eine Adressierungseinheit zur Adresscodezuweisung zu der Rollenantriebseinheit (11) aufweist, die einen, insbesondere vorbestimmten, Adresscode der Rollenantriebseinheit (11) enthält und/oder mit einem Adresscode der Rollenantriebseinheit (11) konfigurierbar ist.

5. Frachtfördersystem (10) nach Anspruch 4,
**dadurch gekennzeichnet, dass**
die Adressierungseinheit mehrere Magnetschalter, insbesondere Reedschalter, und die Frachtfördervorrichtung (14) mehrere Magnete aufweist, die mit den Magnetschaltern derart magnetisch koppelbar oder gekoppelt sind, dass ein Schaltmuster der Magnetschalter einen Adresscode der Rollenantriebseinheit (11) ergibt.

6. Frachtfördersystem (10) nach Anspruch 4 oder 5,
**dadurch gekennzeichnet, dass**
die Adressierungseinheit wenigstens einen, insbesondere nicht-flüchtigen, Datenspeicher mit gespeichertem Adresscode der Rollenantriebseinheit (11) umfasst und/oder die Adressierungseinheit wenigstens einen RFID-Tag aufweist, der mit einem Adresscode der Rollenantriebseinheit (11) beschreibbar und/oder aus dem ein Adresscode der Rollenantriebseinheit (11) auslesbar ist.

7. Frachtfördersystem (10) nach einem der Ansprüche 4 bis 6,
**dadurch gekennzeichnet, dass**
die Adressierungseinheit in das Gehäuse (17) des Verteilermoduls (13) integriert angeordnet ist oder die Adressierungseinheit an dem Gehäuse (17) des Verteilermoduls (13) außen angeordnet ist.

8. Frachtfördersystem (10) nach einem der vorhergehenden Ansprüche,
**dadurch gekennzeichnet, dass**
der Rahmen (19) wenigstens einen in Längsrichtung verlaufenden Führungskanal (21) und einen den Führungskanal (21) verschließenden Deckel aufweist, wobei in dem Führungskanal (21) zumindest einer der Hauptleitungsstränge (15) anordenbar oder angeordnet ist.

9. Frachtfördersystem (10) nach einem der vorhergehenden Ansprüche,
**dadurch gekennzeichnet, dass**
der Rahmen (19) wenigstens eine Montageausnehmung (22) in einer ersten Seitenwand (23) aufweist, in die das Verteilermodul (13) durch Einschieben eingesetzt ist.

10. Frachtfördersystem (10) nach einem der vorhergehenden Ansprüche,
**dadurch gekennzeichnet, dass**
der Rahmen (19) in einer zweiten Seitenwand (24) wenigstens eine Positionieröffnung (25) und das Verteilermodul (13) wenigstens einen Fortsatz (29), insbesondere einen Dorn, umfasst, der in die Positionieröffnung (25) eingreift.

11. Frachtfördersystem (10) nach einem der vorhergehenden Ansprüche,
**dadurch gekennzeichnet, dass**
das Verteilelement wenigstens eine Sende- und/oder Empfängereinheit, insbesondere eine RFID-Einheit und/oder eine Bluetooth-Einheit und/oder eine Funknetzwerk-Einheit, zur drahtlosen Signalübertragung aufweist und/oder das Verteilelement wenigstens einen Sensor, insbesondere Temperatursensor und/oder Lichtsensor und/oder Vibrationssensor und/oder Magnetismus-erkennenden Sensor, aufweist.

12. Frachtfördersystem (10) nach einem der vorhergehenden Ansprüche, mit wenigstens einer ersten Frachtfördervorrichtung (14) und wenigstens einer zweiten Frachtfördervorrichtung (14), wobei wenigstens ein Hauptleitungsstrang (15) der ersten Frachtfördervorrichtung (14) unter Verwendung wenigstens eines Verteilermoduls (13) mit wenigstens einem Hauptleitungsstrang (15) der zweiten Frachtfördervorrichtung (14), insbesondere zur Herstellung eines durchgehenden Datenbusses, in Verbindung steht.

13. Flugzeug mit wenigstens einem Frachtfördersystem (10) nach einem der Ansprüche 1 bis 12.

14. Verfahren zur Bereitstellung eines verkabelten Frachtfördersystems (10), insbesondere eines Flugzeugs, das folgende Schritte umfasst:
- Anbringen von Teilkabelbäumen (15) an Rahmen (19) von Frachtfördervorrichtungen (14) vor einem Einbringen der Frachtfördervorrichtungen (14) in das Flugzeug und/oder vor einem Montieren;
- Montieren von wenigstens zwei Frachtfördervorrichtungen (14) nebeneinander an einem Frachtdeck; und
- Verbinden der Teilkabelbäume (15) der nebeneinander montierten Frachtfördervorrichtungen (14) unter Verwendung eines Verteilermoduls (13), wobei das Verteilermodul (13) an und/oder innerhalb eines der Rahmen (19) zumindest einer der Frachtfördervorrichtungen (14) angebracht oder anbringbar ist.

15. Verfahren nach Anspruch 14,
**dadurch gekennzeichnet, dass**
- das Verteilermodul (13) in und/oder an wenigstens einem der Rahmen (19) formschlüssig und/oder kraftschlüssig befestigt wird; und/oder
- die Rollenantriebseinheit (11) nach der Montage der Frachtfördervorrichtungen (14) auf dem Frachtdeck, insbesondere über eine Steckverbindung, mit dem Verteilermodul (13) verbunden wird; und/oder
- unter Verwendung des Verteilermoduls (13) eine Adresse der zugeordneten Rollenantriebseinheit (11) codiert wird.
